# EUROPEAN PATENT APPLICATION

(11) **EP 1 216 731 A2**
(43) Date of publication of application: **26.06.2002**
(21) Application number: 01128768.7
(22) Date of filing: 03.12.2001
(51) Int. Cl.: A63F 13/10, A63F 13/02

(54) **Object controlling method**

(30) Priority: 13.12.2000 JP 2000378542; 08.08.2001 JP 2001240113
(71) Applicant: Sony Computer Entertainment Inc., Tokyo 107-0052 (JP)
(72) Inventor: Nishizawa, Manabu, Sony Comp. Entertainment Inc., Tokyo 107-0052 (JP); Wakimura, Takayuki, Sony Comp. Entertainment Inc., Tokyo 107-0052 (JP); Sato, Fumiteru, Sony Comp. Entertainment Inc., Tokyo 107-0052 (JP)
(74) Representative: Müller - Hoffmann & Partner

(57) **Abstract**

A game object is displayed based on a parameter correlated to an object, and upon recognition of a predetermined voice, the parameter is properly altered in response to the recognized voice. This allows control of an object using voice as well as using an operating means such as a controller, to thereby enhance pleasure of operating the object.

## Description

The application is related to Japanese Patent Application No. 2000-378542 filed on December 13, 2000 and No. 2001-240113 filed on August 8, 2001, based on which the this application claims priority under the Paris Convention and the contents of which are incorporated herein by reference.

### BACKGROUND OF THE INVENTION

### 1. Field of the Invention

The present invention relates to an object controlling method; a computer-readable recording medium having recorded therein an object controlling program to be executed on a computer; a device for executing an object controlling program; an object controlling program to be executed on a computer; all of which are successfully applicable typically to video game machine or entertainment system having a video game function.

### 2. Description of the Related Art

In recent years, there is widely popularized a video game machine for executing a video game based on a game program which is stored in a recording medium such as CD-ROM, DVD-ROM and semiconductor memory.

Such video game machine is designed to allow a player to manipulate a game object which appears on a display screen through operating a controller plugged into the main unit of the video game machine by hand. Thus the player can enjoy a variety of video games including RPG (Role Playing Game), AVG (Adventure Game) and SLG (Simulation Game).

In the conventional video game machine, the player can only operate the controller by hand or can only manipulate a game object, so that the player can only dedicate themselves to control of the controller by hand in silence, which is just a little short of pleasure in manipulating the game character.

### SUMMARY OF THE INVENTION

The present invention was proposed to address the foregoing problem, and an object thereof resides in that providing an object controlling method; a device for executing an object controlling method or program; a computer program product, in the following also referred to as an object controlling program to be executed; and a computer-readable recording medium having recorded therein an object controlling program to be executed on a computer; all of which allows the player to manipulate a game object through operating a controller and with the aid of player's voice, to thereby enhance fun of a video game and pleasure of manipulating the game character.

The object controlling method according to the present invention is defined in claim 1 and the device for executing an object controlling method or program according to the present invention is defined in claim 4. Preferred embodiments thereof are respectively defined in the respective following subclaims. The computer program product according to the present invention is defined in claim 7 and the computer readable storage medium according to the present invention is defined in claim 8.

According to the present invention, a game object is displayed based on a parameter correlated to an object, and upon recognition of a predetermined voice, such parameter is properly altered in response to the recognized voice. The object is then displayed based on such altered parameter. This allows control of an object using voice as well as using an operating means such as a controller, to solve the foregoing problem.

Other and further objects and features of the present invention will become obvious upon understanding of the illustrative embodiment about to be described in connection with the accompanying drawings or will be indicated in the appended claims, and various advantages not referred to herein will occur to one skilled in the art upon employing of the invention in practice.

### BRIEF DESCRIPTION OF THE DRAWINGS

Fig. 1 is a block diagram showing a constitution of a video game machine according to an embodiment to which the present invention is applied;
Fig. 2 is a perspective view of a controller plugged into a video game machine of the embodiment;
Fig. 3 is a perspective view of a head set through which a player can enter the voice;
Fig. 4 is a drawing of an exemplary game scene displayed on the video game machine of the embodiment;
Fig. 5 is a table showing exemplary parameters of a leading character used for controlled display of actions of such leading character on the video game machine of the embodiment;
Fig. 6 is a table showing exemplary parameters of an enemy character used for controlled display of actions of such enemy character on the video game machine of the embodiment;
Fig. 7 is a table showing exemplary parameters of arms used for controlled display of actions of such arms used by the leading character on the video game machine of the embodiment;
Fig. 8 is a flow chart for explaining voice input operation for the video game machine of the embodiment;
Fig. 9 is a table showing exemplary parameters used when the leading character in a normal psychological state is displayed under control on the video game machine of the embodiment;
Fig. 10 is a table showing exemplary parameters used when the leading character encounters with the enemy character in the video game machine of the embodiment;
Fig. 11 is a schematic drawing showing a player giving through voice input an instruction to the leading character on a display screen of the video game machine of the embodiment;
Fig. 12 is a schematic drawing showing a scene in which the leading character instructed by the player's voice input is fighting with the enemy character on the video game machine of the embodiment; and
Fig. 13 is a table showing parameters used when, upon encountering with the enemy character, the leading character runs away therefrom on the video game machine of the embodiment.

### DETAILED DESCRIPTION OF THE PREFERRED EMBODIMENTS

It is to be noted that the same or similar reference numerals are applied to the same or similar parts and elements throughout the drawings, and the description of the same or similar parts and elements will be omitted or simplified.

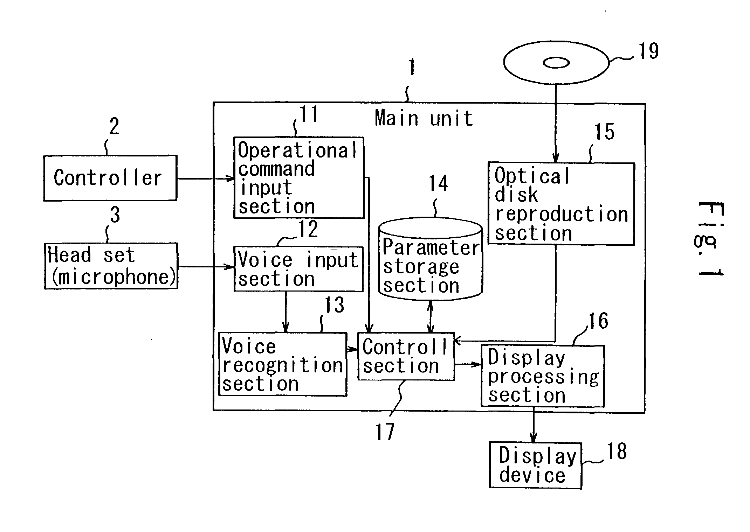

The present invention is applicable, for example, to a video game machine as shown in Fig. 1.

### General Constitution of Video Game Machine

The video game machine shown in Fig. 1 comprises a main unit **1** for executing a battle-type video game described below, a controller **2** to be hand led by a player, and a head set **3** having integrated therein a speaker device for generating effective sound and so forth of such video game and a microphone set for picking up player's voice.

The main unit **1** comprises a operational command input section **11** to which operational commands are supplied from the controller **2** handled by the player, a voice input section **12** to which sound signals corresponded to the player's voice picked up by the microphone unit of the head set **3** are supplied, and a voice recognition section **13** for recognizing meaning of the player's voice based on the sound signals received from the voice input section **12.**

The main unit **1** also has a parameter storage section **14** for storing parameters expressing the number of enemies read out from an optical disk **19** as one of a recording media, apparent fearfulness, distance between the leading character and the enemy character or the like; an optical disk reproduction section **15** for reading out such parameters or game programs from the optical disk **19** loaded thereon; a display processing section **16** responsible for the controlled display of game scenes onto a display device **18;** and a control section **17** for controlling entire portion of such video game machine.

### Constitution of Controller

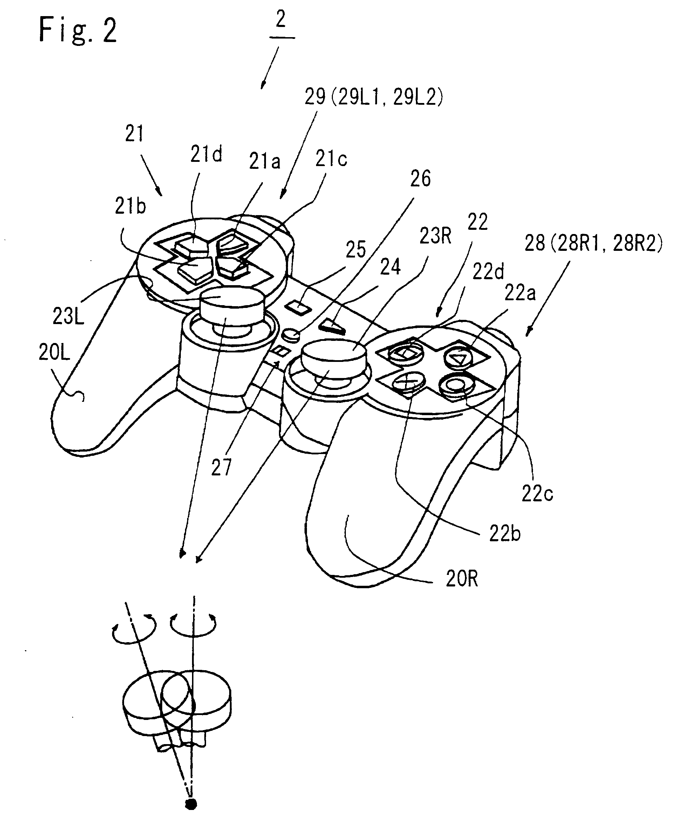

An appearance of the controller **2** is shown in Fig. 2. As is clear from Fig. 2, the controller **2** has two grip ends **20R, 20L** so as to allow a player to grip such grip ends **20R, 20L** with the right and left hands, respectively, to thereby hold the controller **2.**

The controller **2** also has first and second operational portions **21, 22** and analog operational portions **23R, 23L** at positions operable by, for example, the individual thumbs while holding the grip ends **20R, 20L** with the right and left hands, respectively.

The first operational portion **21** is responsible typically for instructing an advancing direction of the game character, which comprises an upward prompt button **21a** for prompting upward direction, a downward prompt button **21b** for prompting downward direction, a rightward prompt button **21c** for prompting rightward direction, and a leftward prompt button **21d** for prompting leftward direction.

The second operational portion **22** comprises a "Δ" button **22a** having a "Δ" marking, a "×" button **22b** having a "×" marking, a "O" button **22c** having a "O" marking, and a "□" button **22d** having a "□" marking.

The analog operational portions **23R, 23L** are designed to be kept upright (not-inclined state, or in a referential position) when they are not inclined for operation, but when they are inclined for operation while being pressed down, a coordinate value on an X-Y coordinate is detected based on the amount and direction of the inclination from the referential position, and such coordinate value is supplied as an operational output via the controller plug-in portion to the main unit **1.**

The controller **2** is also provided with a start button **24** for prompting the game start, a selection button **25** for selecting predetermined articles, and a mode selection switch **26** for toggling an analog mode and a digital mode. When the analog mode is selected with the mode selection switch **26,** a light emitting diode **27** (LED) is lit under control, and the analog operational portions **23R, 23L** are activated. When the digital mode is selected, a light emitting diode **27** (LED) is turned off under control, and the analog operational portions **23R, 23L** are deactivated.

The controller **2** is still also provided with a right button **28** and a left button **29** at positions operable by, for example, the individual second fingers (or third fingers) while holding the grip ends **20R, 20L** with the right and left hands, respectively. The individual buttons **28, 29** comprise first and second right buttons **28R1, 28R2** and first and second left buttons **29L1, 29L2,** respectively, aligned side by side in the direction of the thickness of the controller **2**.

The player is expected to operate these buttons to enter operational commands for the video game machine or characters.

### Constitution of Head Set

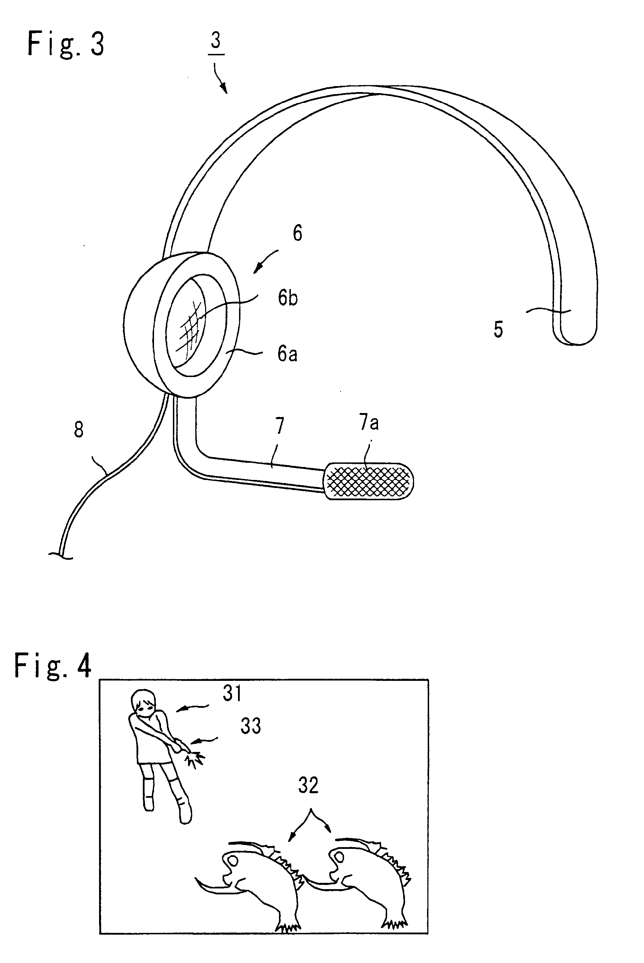

The head set **3** is typically designed for single-ear use as shown in Fig. 3, and has a fitting arm **5** for fitting the head set **3** onto the player's head, a sound emissive portion **6** provided at an end of the fitting arm **5,** and a microphone **7.**

The fitting arm **5** is designed in a curved shape so as to fit the human head profile, and so as to lightly press both sides of the player's head with both ends thereof, to thereby attach the head set **3** onto the player's head.

The sound emissive portion **6** has a pad portion **6a** which can cover the entire portion of the player's right (or left) ear when the head set **3** is fitted on the player's head, and a speaker unit **6b** for emitting effective sound and so forth of the video game. The pad portion **6a** is composed, for example, of a soft material such as sponge.

The microphone **7** is provided on the end of a microphone arm **7a,** the opposite end of which being attached to the sound emissive portion **6.** The microphone **7** is designed to be positioned close to the player's mouth when the head set **3** is fitted on the player's head, which is convenient for picking up player's voice and supplying sound signals corresponded thereof through a cable **8** to the voice input section **12.**

Although the following explanation deals with the head set **3** designed for single-ear use, it should be noted that the binaural specification is also allowable such as a general headphone. The sound emissive portion may have an inner-type earphone, which will be advantageous in reducing the size and weight of such head set.

It should also be noted that while the head set **3** herein is designed to be fitted on the player' s head using the fitting arm **5,** it is also allowable to provide a hook to be hung on either of the player's ears, to thereby allow the head set to be fixed on one side of the player's ear with the aid of such hook.

### Executive Operation of Video Game

Next, executive operation of a battle-type video game on the video game machine of this embodiment will be explained.

In this battle-type video game, a leading character moves from a start point to a goal point along a predetermined route, during which the leading character encounters with enemy characters. Thus the player operates the controller **2** and also speaks to the leading character in the displayed scene through the microphone **7** of the head set **3** to encourage it or make such leading character fight with enemy characters while giving instructions on the battle procedures. The player thus aims at the goal while defeating the enemy characters in such fights.

In the execution of such battle-type video game, the player loads the optical disk **19** having stored therein such battle-type video game into the main unit **1,** and then presses the start button **24** of the controller **2** to prompt the game start. An operational command for prompting the game start is then supplied through the operational command input section **11** to the control section **17** so as to control the optical disk reproduction section **15,** and thus a game program stored in the optical disk **19** and the individual parameters described later are reproduced.

The control section **17** once stores under control in the storage section **14** the individual parameters reproduced by the optical disk reproduction section **15,** generates a game scene of the battle-type video game based on the game program reproduced by the optical disk reproduction section **15** and operation thorough the controller **2** by the player, and then displays such scene on the display device **18** after processing by the display processing section **16.**

Fig. 4 shows one scene of such game, in which a leading character **31** encounters with an enemy character **32** during the travel along the travel route, and points arms **33,** such as laser beam gun, at the enemy character **32.**

### Parameters

The leading character **31,** enemy character **32** and arms **33** used by the leading character are individually set with parameters allowing real-time changes.

### Leading Character Parameters

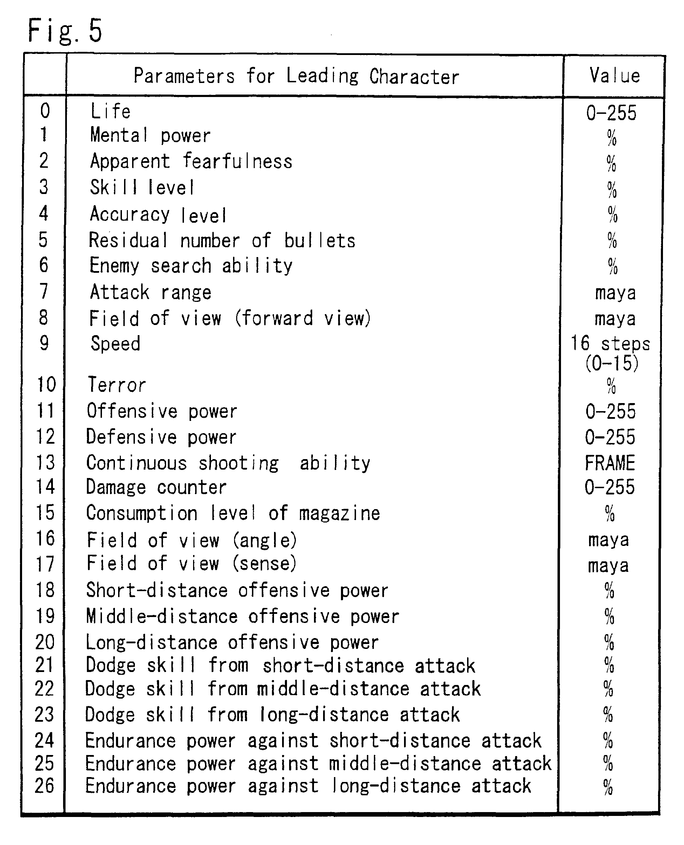

Parameters owned by the leading character **31** are composed as shown in Fig. 5, which typically include vital power (life), mental power, apparent fearfulness, skill level, accuracy level, residual number of bullets of the arms **33,** enemy search ability, attack range, direction of field of view (forward field of view), motional speed (speed), terror, offensive power, defensive power, continuous shooting ability of the arm **33,** damage score (damage counter), decreasing rate of bullets in a magazine of the arm **33** (consumption level of magazine), angle of field of view, sensitivity of field of view (field of view (sense)), short-distance offensive power, middle-distance offensive power, long-distance offensive power, dodge skill from short-distance attack by the enemy (dodge characteristic), dodge skill from middle-distance attack by the enemy, dodge skill from long-distance attack by the enemy, endurance power against short-distance attack by the enemy (defensive characteristic), endurance power against middle-distance attack by the enemy, and endurance power against long-distance attack by the enemy.

Among these, vital power, offensive power, defensive power, and damage score are expressed by values from 0 to 255, which decrease depending on damage given by the enemy. The motional speed (speed) is expressed in 16 steps from 0 to 15. The articles listed from "mental power" to "enemy search ability", terror, consumption level of magazine, and articles listed from "short-distance offensive power" to "endurance power against long-distance attack" are expressed in percent (%)

The continuous shooting ability is expressed by the number of frames for displaying such continuous shooting. The attack range, direction of field of view (forward field of view), angle of field of view, and sensitivity of field of view are individually expressed in a unit of "maya".

### Enemy Character Parameters

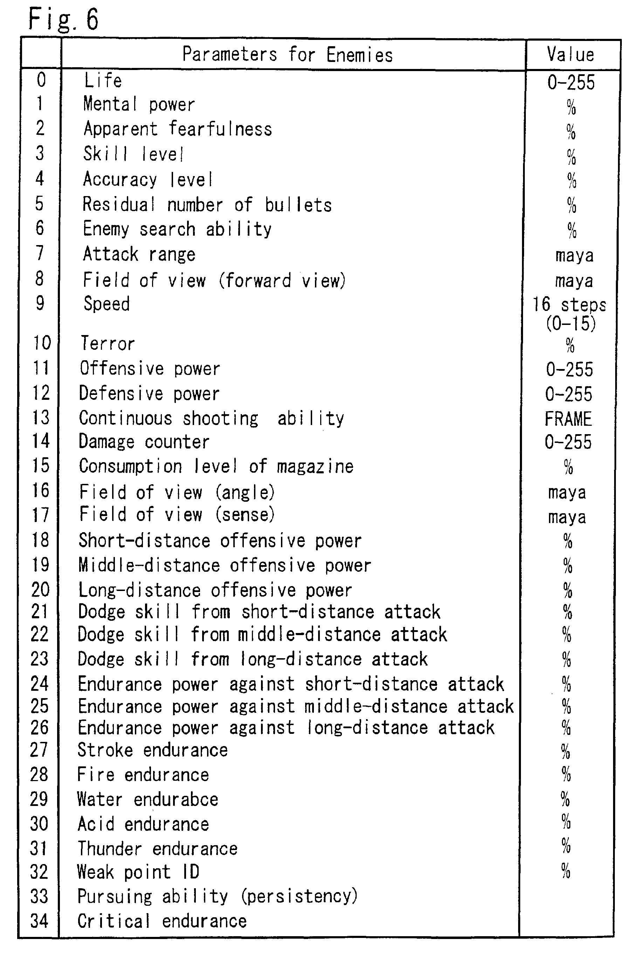

Parameters owned by the enemy character **32** are composed as shown in Fig. 6, which typically include vital power (life), mental power, apparent fearfulness, skill level, accuracy level, residual number of bullets of the arms, enemy search ability, attack range, direction of field of view (forward field of view), motional speed (speed), terror, offensive power, defensive power, continuous shooting ability of the arm, damage score (damage counter), decreasing rate of bullets in a magazine of the arm (consumption level of magazine), angle of field of view, sensitivity of field of view (field of view (sense)), short-distance offensive power, middle-distance offensive power, long-distance offensive power, dodge skill from short-distance attack by the leading character (dodge characteristic), dodge skill from middle-distance attack by the leading character, dodge skill from long-distance attack by the leading character, endurance power against short-distance attack by the leading character (defensive characteristic), endurance power against middle-distance attack by the leading character, and endurance power against long-distance attack by the leading character.

Other parameters owned by the enemy characters **32** include endurance power against attack by the leading character (stroke endurance), endurance power against attack by the leading character using a flame thrower (fire endurance), endurance power against attack by the leading character using a water thrower (water endurance), endurance power against attack by the leading character using an acid thrower (acid endurance), endurance power against thunder shock caused by the leading character (thunder endurance), weak point ID, ability for pursuing the leading character (persistency), and critical endurance.

Among these, vital power, offensive power, defensive power, and damage score are expressed by values from 0 to 255, which decrease depending on damage given by the leading character. The motional speed (speed) is expressed in 16 steps from 0 to 15. The articles listed from "mental power" to "enemy search ability", terror, consumption level of magazine, and articles listed from "short-distance offensive power" to "weak point ID" are expressed in percent (%).

The continuous shooting ability is expressed by the number of frames for displaying such continuous shooting. The attack range, direction of field of view (forward field of view), angle of field of view, and sensitivity of field of view are individually expressed in a unit of "maya".

### Arms Parameters

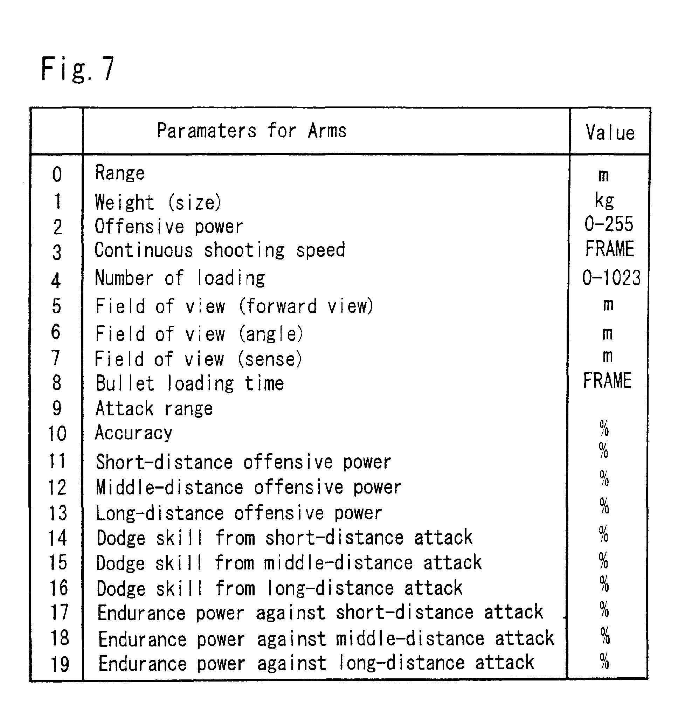

Parameters for the arms **33** owned by the leading character is composed as shown in Fig. 7, which typically include range, weight (size), offensive power, continuous shooting speed, number of loading, direction of field of view (forward field of view) , angle of field of view, sensitivity of field of view (field of view (sense)), bullet loading time, attack range, shooting accuracy, short-distance offensive power, middle-distance offensive power, long-distance offensive power, dodge skill from short-distance attack by the enemy (dodge characteristic), dodge skill from middle-distance attack by the enemy, dodge skill from long-distance attack by the enemy, endurance power against short-distance attack by the enemy (defensive characteristic), endurance power against middle-distance attack by the enemy, and endurance power against long-distance attack by the enemy.

Among these, the range, direction of field of view (forward field of view), angle of field of view, and sensitivity of field of view are expressed in meter (m) , and the offensive power is typically expressed by values from 0 to 255. The weight is expressed in kilogram (kg), the number of loading in values from 0 to 1023, the continuous shooting speed and bullet loading time in the number of frames for displaying such continuous shooting. The articles listed from "shooting accuracy" to "endurance power against long-distance attack by the enemy" are individually expressed in percent (%).

### Display Control based on Parameters

Such individual parameters are read out from the optical disk **19,** and then stored in the parameter storage section **14** shown in Fig. 1. The control section **17** properly reads out the parameter from the parameter storage section **14** depending on a scene or situation, to thereby display under control the leading character **31,** enemy character **32** and arms **33** used by the leading character.

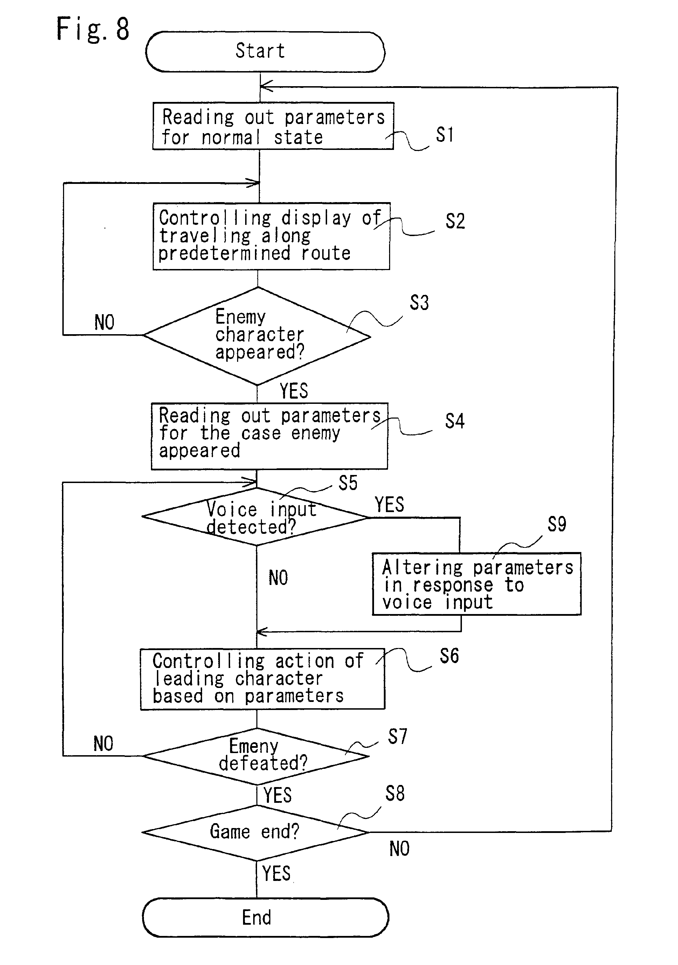

A process flow of the controlled display based on such parameters will be explained referring to a flow chart of Fig. 8. The process flow starts when the main unit **1** starts the video game, and the process by the control section **17** goes to step **S1.**

In step **S1,** the control section **17** reads out parameters for the normal state from various parameters stored in the parameter storage section **14,** and then, in step **S2,** displays under control the leading character **31** moving along a predetermined route while keeping a psychological state corresponded to such normal parameters.

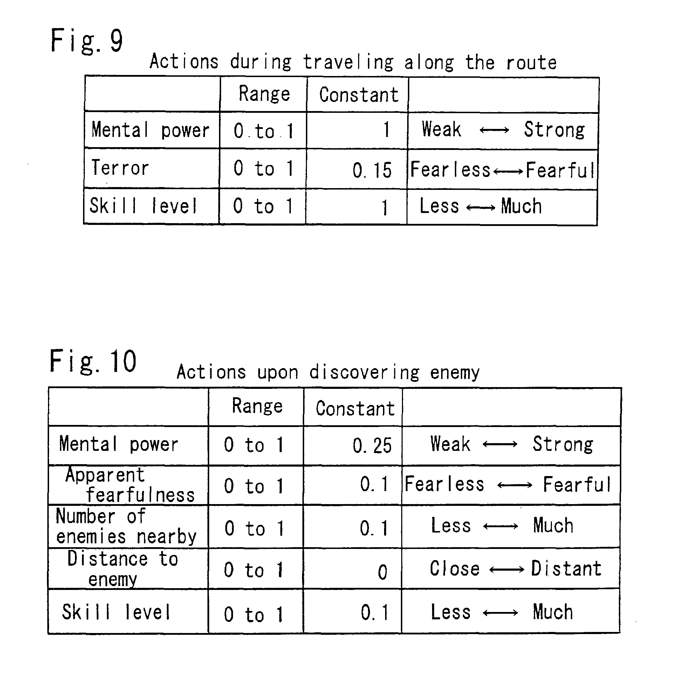

Examples of the parameters for the normal state of the leading character **31** read out from the parameter storage section **14** include mental power, terror and skill level as listed in Fig. 9. The individual values of such parameters for the normal state of the leading character **31** are "1" for the mental power, "0.15" for terror, and "1" for skill level.

The "mental power" parameter ranges from 0 to 1 (corresponding to weak to strong) depending on the mental condition of the leading character; the "terror" parameter ranges also from 0 to 1 (corresponding to fearless to fearful) depending on the number or apparent fearfulness of the enemy characters; and the "skill level" parameter ranges again from 0 to 1 (corresponding to less to much) depending on the number of times the game is executed, in which the leading character **31** gains experience by repeating battles with the enemy character **32.**

The enemy character **32** is designed to attack the leading character **31** at predetermined points on the travel route. In step **S3** in the flow chart shown in Fig. 8, the control section **17** determines whether the enemy character **32** which may attack the leading character **31** appeared or not, and the process thereof returns to step **S2** when the enemy character **32** was not found, to thereby display under control actions of the leading character **31** based on the foregoing parameters for the normal state.

On the contrary, when the enemy character **32** appeared, the control section **17** reads out in step **S4** the parameters of the leading character **31** for the case of encountering with the enemy character **32.**

The parameters of the leading character **31** read out from the parameter storage section **14** for the case of encountering with the enemy character **32** include, as typically listed in Fig. 10, those for mental power of the leading character, apparent fearfulness of the enemy character **32,** number of the enemies nearby, distance to the enemy character **32** and skill level.

As is clear from Fig. 10, the individual values of such parameters of the leading character **31** for the case of encountering with the enemy character **32** are "0.25" for the mental power, "0.1" for the apparent fearfulness of the enemy character **32,** "0.1" for the number of enemies nearby, "0" for the distance to the enemy character **32,** and "0.1" for the skill level.

The control section **17** displays under control actions of the leading character **31** based on the parameters listed in Fig. 10 for the case of encountering with the enemy character **32,** where the display of such actions of the leading character **31** can be altered depending on the presence or absence of voice input by the player in such controlled display.

More specifically, the control section **17** determines in step **S5** the presence or absence of the player's voice input upon reading out the parameters of the leading character **31** for the case of encountering with the enemy character **32,** and the process thereof goes to step **S9** when the voice input from the player is detected, and goes to step **56** when not detected.

In step **S6,** reached after detecting no voice input from the player, the control section **17** displays under control the leading character **31** using parameters of such leading character **31** read out from the parameter storage section **14** for the case of encountering the enemy character **32** without alteration.

On the other hand in step **S9,** reached after detecting voice input from the player, the control section **17** alters the individual parameters of the leading character **31,** read out from the parameter storage section **14** for the case of encountering the enemy character **32,** into values corresponding to the player's voice input, and then in step **S6,** actions of the leading character **31** are displayed under control based on such altered values of the parameters.

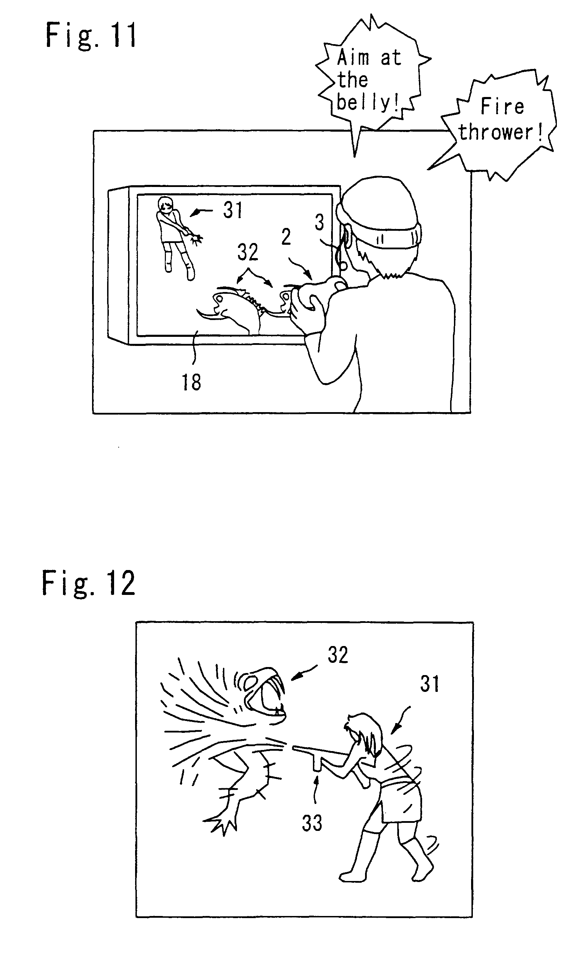

Fig. 11 shows an exemplary scene in which the enemy character **32** appeared in front of the leading character moving along the route. In such exemplary case, in order to make the leading character **31** fight with the enemy character **32,** the player not only controls the controller **2,** but also gives instructions to the leading character **31** through voice such as "Fire thrower!" so as to designate an arm to be used for attacking the enemy character **32,** and such as "Aim at the belly!" so as to designate a weak point of the enemy character **32** to be aimed at.

The player's voice is picked up by the microphone **7** of the head set **3** shown in Fig. 3, converted into sound signals, which are then supplied via the voice input section **12** to the voice recognition section **13.** The voice recognition section **13** analyzes meaning of the phrase spoken by the player based on waveform pattern of such sound signals, and supplies the analytical results to the control section **17.** The control section **17** then alters the values of the individual parameters, read out in step **S4,** of the leading character **31** for the case of encountering with the enemy character **32** based on such analytical results. Actions of the leading character **31** are displayed under control based on such altered parameters.

In such exemplary case, in which the instructions of "Fire thrower!" and "Aim at the belly!" were made by the player, the control section **17** allows the controlled display such that the leading character **31** holds a fire thrower as the arms **33** and throws fire to the enemy character **32** using such fire thrower to thereby expel it.

In step **S7** in the flow chart shown in Fig. 8, the control section **17** determines whether the enemy character **32** was defeated or not, and the operation of the main unit **1** goes to step **S8** for the case the enemy character **32** was defeated, and returns to step **S5** when not defeated. Then presence or absence of the player's voice input is determined in step **S5** as described in the above, and then in step **S9** or step **S6,** actions of the leading character **31** are displayed under control based on the parameters corresponding to the presence or absence of the player's voice input.

In step **S9,** whether the video game was completed either in response to defeat of the enemy character **32** or in response to instruction of end of the game issued by the player is determined, and the entire routine of the flow chart shown in Fig. 8 is terminated without any other operations when the end of the game was detected, and the operation of the control section **17** returns to step **S1** when the game is not completed yet. The control section **17** then reads out the parameters of the leading character **31** for the normal state from the parameter storage section **14,** and displays under control the leading character **31** with the parameters for the normal psychological state so as to travel along a predetermined route.

### Escaping Action from Enemy Character

The description in the above dealt with the case that the leading character **31** fights with the enemy character **32,** where the leading character **31** does not always fight with the encountered enemy character **32,** and the actions thereof may differ depending on the psychological state (parametric values).

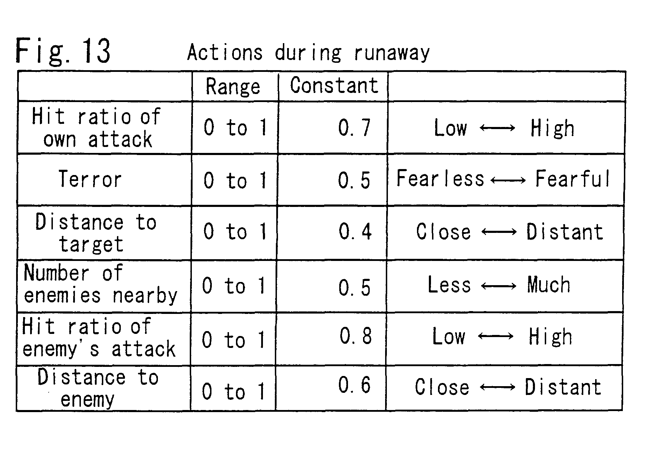

More specifically, when a value of the "terror" parameter of the leading character **31** encountering with the enemy character **32** is higher than a predetermined value, the control section **17** displays under control the leading character **31** such that running away from the enemy character **32.** Fig. 13 shows the individual parametric values for the leading character **31** in such situation.

As is clear from Fig. 13, when the leading character **31** runs away from the enemy character **32,** the individual values of such parameters are "0.7" for the hit ratio of own attack, "0.5" for the terror, "0.4" for the distance to the target, "0.5" for the number of enemies nearby, "0.8" for the hit ratio of the enemy's attack, and "0.6" for the distance to the enemy. The control section **17** is designed to display under control the leading character **31** such that running away from the enemy character **32** for example when the values for the "terror" parameter exceeds "0.5".

When the player encourages the leading character **31** about to run away with a word such as "Hold out!" or "Don't run away!", the control section **17** lowers the value for the "terror" parameter to a predetermined value. If the lowered value for the "terror" parameter becomes lower than "0.4", the control section **17** displays under control actions of the leading character **31** based on the parameters for the normal state as previously described referring to Fig. 9. The leading character **31** now has the normal psychological state, stops running away from the enemy character **32** and begins to advance along a predetermined route in a normal way of walking.

Even if the player speaks the words, the controlled display of the leading character **31** such that running away will be retained by the control section **17** if the "terror" parameter still remains at "0.5" or above. In this case, the leading character **31** keeps on running away from the enemy character **32** disobeying the player. When the leading character **31** came far enough from the enemy character **32,** the control section **17** lowers the value of the "terror" parameter to thereby display under control the leading character **32** so as to have normal actions.

### Voice Instruction for Cases other than Encountering Enemy Character

The player watching the leading character **31** moving along the route may speak to such leading character **31** in the displayed scene such as "Watch out!" or "Be careful!" when the player feels a sign of abrupt appearance of the enemy character **32.** Upon receiving such voice input, the control section **17** typically raises the value of the "terror" parameter of the leading character **31** by a predetermined range, and displays under control the leading character based on such raised parametric value.

Since the value of the "terror" parameter was raised by a predetermined range, the control section **17** displays under control the leading character **31** so as to make careful steps along the route while paying attention to the peripheral, which was altered from the previous normal steps.

When the leading character **31** walking with careful steps encounters with the enemy character **32** as expected, the control section **17** displays under control actions of the leading character **31** based on the parameters for the case encountering with the enemy character **32,** which were previously explained referring to Fig. 10.

When the leading character **31** walking with careful steps did not encounter with the enemy character **32** and it was defined as no more dangerous, the player then gives voice instruction such as "Out of danger. Forward normally". The control section **17** reads out the parameters for the normal psychological state according to such voice input as previously explained referring to Fig. 9, to thereby displays actions of the leading character **31** based on such parameters.

As is clear from the above, for the case of certain event, for example such that the enemy character **31** appeared, the video game machine of this embodiment reads out parameters corresponding to such event, and displays under control actions of the leading character **31** based on such read parameters. If the player's voice was recognized, the read parameters can also be altered based on such recognized voice, and are used for the controlled display of actions of the leading character **31.** Thus the leading character **31** can be manipulated through the controller and voice input.

Since the leading character **31** can be operated not only through the controller but also by voice input, the player is ready to empathize with the video game, which promotes the player to positively participate in the game. Thus interest of the video game can be enhanced with pleasure of manipulating the leading character **31.**

Action of the leading character **31,** however not always depends on the player's voice input since the control section **17** separately controls the display of actions of the leading character **31,** which is again a characteristic interest of this video game.

While the above description dealt with the case in which the leading character **31** is controlled by voice input for the simplicity of the understanding of the embodiment, it is also allowable to control the enemy character **32** by such voice input. For example, controlling the leading character **31** by one player and the enemy character **32** by the other player allows mutual attack through voice inputs, which will enhance interest of the video game.

While the above description dealt with the battle-type video game, the present invention is also applicable to any other types of video games other than such battle-type game, provided that objects such as characters are operable through voice input.

The embodiment described in the above is an example of the present invention. It is therefore to be understood that the present invention may be practiced in any modifications depending on the design or the like otherwise than as specifically described herein without departing from the scope and the technical spirit thereof.

## Claims

1. An object controlling method comprising the steps of:
recognizing voice;
determining a parameter correlated to an object;
altering the parameter in response to the recognized voice; and
controlling the object based on the altered parameter.

2. The method according to Claim 1, further comprising the step of:
moving the object along a predetermined route.

3. The method according to Claim 1 or 2, further comprising the step of:
controlling the object in response to operation through an operating means.

4. A device for executing an object controlling method or program, comprising:
a voice unit that recognizes input voice;
determining means for determining a parameter correlated to an object;
changing means for varying the parameter in response to the recognized voice; and
control means for controlling the object based on the changed parameter.

5. The device according to Claim 4, further comprising:
moving means for moving the object along a predetermined route.

6. The device according to Claim 4 or 5, further comprising:
operating unit that controls the object.

7. Computer program product, comprising computer program means adapted to perform the method steps as defined in anyone of claims 1 to 3 when being executed on a computer, digital signal processor, or the like.

8. Computer readable recording medium having recorded therein a computer program product according to claim 7.
